# EUROPÄISCHE PATENTSCHRIFT

(11) **EP 3 567 618 B1**
(45) Veröffentlichungstag und Bekanntmachung des Hinweises auf die Patenterteilung: **28.09.2022**
(21) Anmeldenummer: 19173452.4
(22) Anmeldetag: 09.05.2019
(51) Int. Cl.: H01F 27/02, H01F 38/14, B60L 53/12, B60L 53/302, H02J 7/00, H02J 50/10

(54) **INDUKTIONSVORRICHTUNG ZUM LADEN VON KRAFTFAHRZEUGEN**
INDUCTION DEVICE FOR CHARGING MOTOR VEHICLES
DISPOSITIF D'INDUCTION POUR CHARGER DES VÉHICULES AUTOMOBILES

(30) Priorität: 09.05.2018 DE 102018111244
(43) Veröffentlichungstag der Anmeldung: 13.11.2019
(73) Patentinhaber: Zollner Elektronik AG, 93499 Zandt (DE)
(72) Erfinder: Bruckner, Gerhard, 94234 Viechtach (DE)
(74) Vertreter: Bittner, Bernhard

(56) Entgegenhaltungen:
- WO-A1-2012/090342
- DE-A1-102012 202 472
- JP-A- 2013 172 503
- US-A1- 2012 319 647

## Beschreibung

Die vorliegende Erfindung bezieht sich auf eine elektrischen Baueinheit zur induktiven Ladestromübergang für Kraftfahrzeugen. Aus dem Stand der Technik sind seit längerer Zeit Elektrofahrzeuge, beispielsweise elektrisch betriebene Pkw bekannt. Üblicherweise werden im Stand der Technik Kabelverbindungen eingesetzt, um diese Kraftfahrzeuge zu laden. Dieser Ladevorgang ist bisweilen relativ umständlich, da der Benutzer hierzu aussteigen und ein Kabel an sein Fahrzeug anschließen muss. Entsprechend sind in jüngerer Zeit auch induktive Ladesysteme bekannt geworden. Bei diesen Systemen wird üblicherweise eine stationär angeordnete Spuleneinrichtung vorgesehen, welche mit einer am Fahrzeug vorgesehenen weiteren Spuleneinrichtung zusammenwirkt, um so elektrische Energie induktiv zu übertragen.

Dokument DE 102012 202 472 A1 offenbart eine Vorrichtung zur kontaktlosen Übertragung von Energie auf eine korrespondierenden Vorrichtung eines Fahrzeuges.

Die vorliegende Erfindung bezieht sich dabei insbesondere auf die nachfolgend auch als Sendespule bezeichnete Spuleneinrichtung, die üblicherweise stationär angeordnet ist und die am Fahrzeug angeordnete Empfangsspule mit elektrischer Energie versorgt. Diese Sendespuleneinrichtung muss dabei diversen Kriterien genügen. Einerseits ist zu beachten, dass induktiv sehr hohe Energiemengen übertragen werden müssen und entsprechend sehr hohe Ströme fließen. Weiterhin ist beachten, dass diese Sendevorrichtung eine gewisse Stabilität bzw. Widerstandsfähigkeit gegenüber möglichen mechanischen Beschädigungen aufweisen muss. Daneben ist auch zu beachten, dass elektrische Komponenten innerhalb der Sendespule, insbesondere die Leistungselektronik und/oder Steuerelektroniken in besonderer Weise geschützt werden müssen. Daneben muss auch Sorge getragen werden für eine ausreichende Kühlung diese Sendevorrichtung.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße elektrische Baueinheit zur induktiven Ladestromübertragung für Kraftfahrzeuge weist ein Gehäuse auf, innerhalb dessen wenigstens eine elektrische Spuleneinrichtung zur induktiven Energieübertragung angeordnet ist. Weiterhin weist die Vorrichtung eine Schnittstelle auf, welche eine elektrisch leitende Konnnektierung dieser Spuleneinrichtung ermöglicht, wobei das Gehäuse einen ersten Gehäuseteil und einen zweiten Gehäuseteil aufweist, welche mit wenigstens einem Befestigungsmittel aneinander befestigt sind und wobei sich die beiden Gehäuseteile jeweils entlang seiner Längsrichtung und einer zu dieser Längsrichtung senkrechten Breitenrichtung erstrecken. Weiterhin weist die Vorrichtung wenigstens eine elektrische Anschlusseinrichtung auf, um die elektrische Baueinheit an ein Stromnetz anzuschließen.

Weiterhin weist die Baueinheit eine Trägereinrichtung zum Tragen der Spuleneinrichtung auf und eine elektronische Steuereinrichtung zum Steuern der Baueinheit ist an oder in dieser Trägereinrichtung angeordnet. Weiterhin sind die beiden Gehäuseteile bezüglich einander in der Längsrichtung und/oder der Breitenrichtung beweglich gelagert. Durch die oben genannten Ausgestaltungen können insbesondere unterschiedliche Ausdehnungen kompensiert werden. Besonders bevorzugt handelt es sich bei den Befestigungseinrichtungen um Schrauben. Besonders bevorzugt sind diese Schrauben aus Aluminium hergestellt. Dabei können sich diese Schrauben an einem der beiden Gehäuseteile, insbesondere dem ersten Gehäuseteil abstützen und durch den anderen Gehäuseteil, etwa durch hierfür vorgesehene Öffnungen hindurchragen.

Besonders bevorzugt sind diese Befestigungselemente bzw. Schrauben in einem Umfangsbereich des wenigstens einen Gehäuseteils angeordnet.

Bei einer weiteren bevorzugen Ausführungsform erstreckt sich das Gehäuse auch in einer Höhenrichtung, welche insbesondere zu der Längen- und der Breitenrichtung senkrecht steht, und welche besonders bevorzugt wesentlich kleiner ist als die Längen- und die Breitenausdehnung. Besonders bevorzugt sind die Längenausdehnung und die Breitenausdehnung wenigstens drei Mal so lang, bevorzugt wenigstens fünf Mal so lang und bevorzugt wenigstens 10 Mal so lang, als die Höhenausdehnung. Auf diese Weise wird ein insgesamt sehr flaches Gehäuse zur Verfügung gestellt, welches auch im Betrieb wenig behindert.

Bei einer weiteren bevorzugten Ausführungsform weist das Gehäuse abgerundete Ecken auf. Daneben ist es auch möglich, dass zumindest einige der Außenoberflächen des Gehäuses glatt ausgeführt sind. Auch die Seitenkanten wenigstens eines Gehäuseteils sind bevorzugt wenigstens abschnittsweise gerundet ausgeführt.

Bei einer weiteren vorteilhaften Ausführungsform sind mehrere Elemente und insbesondere Elektronikelemente in das Gehäuse integriert.

Besonders bevorzugt weist die Vorrichtung auch einen Ferritkörper und insbesondere ein oder mehrere Ferritplatten auf, die im Inneren des Gehäuses angeordnet sind. Bei einer vorteilhaften Ausführungsform weist der Ferritkörper mehrere Ferritplattenelemente auf. Besonders bevorzugt sind diese Ferritplattenelemente wenigstens teilweise überlappend angeordnet. Bevorzugt liegen die Ferritplattenelemente in demjenigen Bereich, in dem sie überlappen, unmittelbar aneinander und besonders bevorzugt unmittelbar übereinander. Dieses Überlappen bietet eine vorteilhafte Ausgestaltung zur Übertragung der magnetischen Felder.

Bei einer bevorzugten Ausführungsform überlappen diese Ferritplatten in einem Bereich, der breiter ist als 5 mm, bevorzugt breiter als 10 mm, bevorzugt breiter als 15 mm und besonders bevorzugt breiter als 20 mm.

Bei einer weiteren bevorzugten Ausführungsform überlappen diese Ferritplatten in einem Bereich, der schmaler ist als 50 mm, bevorzugt schmaler als 40 mm, bevorzugt schmaler als 30 mm.

Bei einer weiteren bevorzugten Ausführungsform handelt es sich bei den Gehäuseteilen um ein Deckelteil und ein Bodenteil. Dabei ist es denkbar, dass das Bodenteil gleichzeitig auch als Kühleinrichtung für die Vorrichtung dient. Besonders bevorzugt ist wenigstens einer dieser Gehäuseteile und sind bevorzugt beide Gehäuseteile in der Lage, Kräften standzuhalten, die größer sind 400 N, bevorzugt größer als 800 N, bevorzugt größer als 1000 N, bevorzugt größer als 1500 N, besonders bevorzugt größer als 2000 N, besonders bevorzugt größer als 2500 N, besonders bevorzugt größer als 3000 Newton, besonders bevorzugt größer als 3500 N, besonders bevorzugt größer als 4000 N und besonders bevorzugt größer als 5000 N, besonders bevorzugt größer als 6000 N, besonders bevorzugt größer als 7000 N und besonders bevorzugt größer als 8000 N.

Aus diese Weise ist der Gehäuseteil bzw. das Gehäuse derart gestaltet, dass auch starken Belastungen standgehalten werden kann, beispielsweise in der Situation, in der ein Fahrer versehentlich mit den Rädern bzw. mit einem Rad auf das Gehäuse fährt. Insbesondere handelt es sich bei diesen Kräften um in einer vertikalen Richtung wirkende Kräfte, welche also insbesondere dadurch bedingt sind, dass sich auf der montierten Baueinheit ein Objekt (wie etwa der Reifen eines Fahrzeugs und/oder eine Person befindet.

Besonders bevorzugt weist die Vorrichtung wenigstens eine Sensoreinrichtung und bevorzugt mehrere Sensoreinrichtungen auf, welche bestimmte Betriebsparameter überwachen. Besonders bevorzugt sind auch diese Sensoren bzw. Sensoreinrichtungen in das Gehäuse integriert.

Bevorzugt ist wenigstens eine Sensoreinrichtung aus einer Gruppe von Sensoreinrichtungen ausgewählt, welche Positionierungssensor zur Erfassen der Baueinheit gegenüber einer Induktionsvorrichtung eines Fahrzeugs erfasst, Objekterkennungssensoren, welche das Vorhandensein von Objekten an oder in der Nähe der Baueinheit erfasst, Stromerfassungssensoren, Temperatursensoren, Drucksensoren, Belastungssensoren oder dergleichen enthält.

Bei einer weiteren vorteilhaften Ausführungsform ist die Spuleneinrichtung an nur und insbesondere an genau einem der Gehäuseteile befestigt. Insbesondere ist die Spuleneinrichtung an einem aus Kunststoff gefertigten Gehäuseteil befestigt.

Bei einer besonders bevorzugten Ausführungsform ist die Spulenreinrichtung derart in dem Gehäuse angeordnet, dass eine Ebene der Spuleneinrichtung (in einem montierten Zustand der Baueinheit) im Wesentlichen horizontal steht.

Bei einer weiteren bevorzugten Ausführungsform sind der erste Gehäuseteil und der zweite Gehäuseteil miteinander schwimmend bezüglich einander verbunden. Dies bedeutet, dass die Befestigungen zwischen den beiden Gehäuseteilen derart ausgebildet sind, dass eine gewisse Relativverschieblichkeit des einen Gehäuseteils gegenüber dem anderen Gehäuseteil ermöglicht ist. Dabei handelt es sich insbesondere um eine Verschieblichkeit in einer X-Richtung und hierzu senkrechten Y-Richtung.

Bevorzugt ist der erste Gehäuseteil gegenüber dem zweiten Gehäuseteil in einem wesentlichen horizontalen Ebene - insbesondere schwimmend - beweglich.

Bei einer weiteren vorteilhaften Ausführungsform sind der erste Gehäuseteil und der zweite Gehäuseteil miteinander fluiddicht verbunden. Dies hat den Vorteil, dass insbesondere auch keine Flüssigkeiten, wie beispielsweise Spritzwasser im Rahmen von Reinigungsprozessen in das Gehäuse gelangen können. Dabei erlaubt besonders bevorzugt auch eine entsprechende fluiddichte Verbindung eine gewisse Relativbeweglichkeit der Gehäuseteile bezüglich einander.

Insbesondere die schwimmende Lagerung bietet den Vorteil, dass ein Ausgleich von Fertigungstoleranzen ermöglicht ist. Daneben können durch eventuelle unterschiedliche Längenausdehnungskoeffizienten ausgeglichen werden. Dabei ist es möglich, dass die Befestigungsmittel, und insbesondere aber nicht ausschließlich Schrauben, in Öffnungen geführt werden, gegenüber denen sie ein gewisses Spiel haben.

Besonders bevorzugt ist der andere Gehäuseteil aus einem Metall oder einem Kunststoff gefertigt. Besonders bevorzugt handelt es sich bei diesem anderen Gehäuseteil um das Bodenteil. Dabei ist es insbesondere möglich, dass dieser andere Gehäuseteil gegenüber einem Boden befestigt, beispielsweise verschraubt, ist.

Bei einer weiteren bevorzugten Ausführungsform ist an wenigstens einem Gehäuseteil ein Befestigungsmittel angeordnet, um die elektrische Baueinheit stationär zu befestigen und insbesondere an einem Boden stationär zu befestigen. Dabei kann es sich beispielsweise um Schraubmittel handeln, welche, beispielsweise mittels Dübel, in einem Boden verschraubt werden können. Daneben wäre jedoch auch eine Verschraubung an einem Gestell oder einem anderen Träger möglich.

Es wird jedoch darauf hingewiesen, dass diese Baueinheit bzw. die Induktionsvorrichtung insbesondere an einem Boden angeschraubt werden kann. Es wäre jedoch auch denkbar, dass eine Verschraubung an Seitenwänden eines Raumes erfolgt.

Bei einer weiteren vorteilhaften Ausführungsform sind diese Befestigungsmittel bevorzugt an einem der Gehäuseteile angeordnet und erstrecken sich besonders bevorzugt durch den anderen Gehäuseteil, beispielsweise durch Öffnungen innerhalb dieses anderen Gehäuseteils.

Besonders bevorzugt sind mehrere Befestigungsmittel vorgesehen. Besonders bevorzugt weist die Vorrichtung wenigstens vier Befestigungsmittel auf. Diese können beispielsweise an Ecken eines Gehäuses angeordnet sein.

Bevorzugt sind sowohl Befestigungsmittel vorgesehen, welche die beiden Gehäuseteile aneinander befestigen als auch - insbesondere zusätzliche - Befestigungsmittel, welche die Baueinheit an einem Boden befestigen bzw. allgemein stationär befestigen.

Bei einer weiteren bevorzugten Ausführungsform ist das Gehäuse an einem Boden befestigt. Dabei ist es insbesondere denkbar, dass das Gehäuse an den definierten Stellen an einem Boden befestigt wird. Aus diese Weise kann die gesamte Induktionsvorrichtung so montiert werden, dass sie mit einem darüber fahrenden Fahrzeug einfach erreicht werden kann.

Bei einer weiteren bevorzugten Ausführungsform ist das Gehäuse auch schwimmend an definierten Stellen am Boden befestigbar. Auch auf diese Weise wird eine gewisse Beweglichkeit des Gehäuses insbesondere in einer horizontalen Ebene ermöglicht. Es wäre jedoch auch möglich, dass die schwimmende Lagerung in einer senkrechten bzw. vertikalen Richtung erfolgt.

Bei einer weiteren bevorzugten Ausführungsform ist die schwimmende Lagerung in mehreren Richtungen gegeben, und besonders bevorzugt sowohl in einer horizontalen Ebene sowie auch einer hierzu senkrechten Richtung. Besonders bevorzugt ist also die schwimmende Lagerung in drei zueinander senkrechten Richtungen, insbesondere der X-, Y- und Z-Richtung gegeben.

Durch diese schwimmende Anordnung kann insbesondere wieder ein Ausgleich von Fertigungstoleranzen folgen. Weiterhin ist auch ein Ausgleich von Montagetoleranzen, insbesondere in horizontalen X- und Y-Richtungen denkbar.

Daneben kann auch eine schwimmende Anordnung in Z-Richtung vorgesehen sein, insbesondere um in einem Boden auftretende Bodenunebenheiten auszugleichen. Weiterhin können durch die schwimmende Lagerung auch Längenausdehnungen eines Gehäuseteils, beispielsweise eines Bodenteils aus Aluminium, etwa infolge von Erwärmung, das heißt insbesondere während des Betriebs ausgeglichen werden.

Besonders bevorzugt wird wenigstens ein Gehäuseteil, insbesondere ein aus Aluminium bestehender Gehäuseteil schwimmend an definierten Stellen beispielsweise mit Schraubverbindungen an einen Boden befestigt.

Bei einer weiteren vorteilhaften Ausführungsform weist wenigstens ein Gehäuseteil und insbesondere ein Deckelteil Öffnungen und insbesondere Montageöffnungen auf. Über diese Montageöffnungen sind beispielsweise Schraubkörper zugänglich. Dabei ist besonders bevorzugt ein Körper bzw. Bauteil zum Verdecken dieser Öffnungen vorgesehen. Auf diese Weise kann die betreffende Schnittstelle vor dem Eintritt von Fluid oder Schmutz geschützt werden.

Bei einer bevorzugten Ausführungsform kann ein derartiger Montageschutz, das heißt, ein Verschluss der Montageöffnung mit einem Körper und/oder einem Bauteil auch die Sicherheit gegen Vandalismus erhöhen.

Bei einer weiteren bevorzugten Ausführungsform ist zwischen dem ersten Gehäuseteil und dem zweiten Gehäuseteil eine Dichtungseinrichtung angeordnet. Besonders bevorzugt handelt es sich hierbei um eine umlaufende Dichtung. Diese Dichtung kann beispielsweise in einer Nut eines Gehäuseteils angeordnet sein. Besonders bevorzugt handelt es sich hierbei um eine Dichtungseinrichtung aus einem flexiblen Material. So könnte beispielsweise eine Silikondichtung vorgesehen sein. Daneben handelt es sich bei der Dichtungseinrichtung bevorzugt um eine einzige applizierte elastische Dichtung handeln.

Daneben könnte jedoch auch eine elastische Verklebung zwischen den Gehäuseteilen vorgesehen sein.

Erfindungsgemäß sind die beiden Gehäuseteile, wie oben erwähnt, bezüglich einander in der Längsrichtung und/oder der Breitenrichtung beweglich gelagert. Dabei ist es insbesondere denkbar, dass an einem Gehäuseteil die Befestigungsmittel angeordnet sind, und an dem anderen Teil Öffnungen, durch welche diese Befestigungsmittel geführt sind.

Bei einer besonders bevorzugten Ausführungsform sind an einem Gehäuseteil Vorsprünge angeordnet, welche in Ausnehmungen, welche an einem anderen Gehäuseteil sind, eingreifen. Insbesondere sind dabei diese Vorsprünge nebeneinander bzw. hintereinander in Umfangsrichtung des Gehäuses angeordnet. Weiterhin können sich diese Vorsprünge jedoch in der Höhen- bzw. Dickenrichtung des Gehäuses erstrecken.

Bei einer weiteren vorteilhaften Ausführungsform weist die Baueinheit einen in der Umfangsrichtung der Baueinheit wenigstens teilweise umlaufenden und bevorzugt umlaufenden Anschlage auf. Dieser Anschlag bzw. Vorsprung kann insbesondere zum Schutz der Dichtungseinrichtung dienen.

Besonders bevorzugt definiert dieser Anschlag auch eine zulässige Kompression der Dichtungsrichtung. Besonders bevorzugt limitiert dieser Anschlag eine Relativbeweglichkeit des einen Gehäuseteils gegenüber dem anderen Gehäuseteil und insbesondere eine Relativbeweglichkeit in einer Richtung und bevorzugt in wenigstens einer Richtung. Hierbei kann es sich um die Längen oder die Breitenrichtung aber auch um die Höhenrichtung handeln.

Bei einer besonders bevorzugten Ausführungsform weist die Baueinheit auch eine zusätzlich umlaufende Tropfkante auf. Diese Tropfkante kann dabei gleichzeitig auch die oben erwähnte Schutzeinrichtung sein. Besonders bevorzugt ist diese Tropfkante ebenfalls an wenigstens einem Gehäuseteil und besonders bevorzugt an genau einem Gehäuseteil angeordnet. Hierbei kann es sich um den ersten Gehäuseteil (beispielsweise einen Deckel) aber auch um einen zweiten Gehäuseteil (beispielsweise einem Boden) handeln.

Bei einer weiteren vorteilhaften Ausführungsform weist die Baueinheit wenigstens eine strukturierte Oberfläche auf. Besonders bevorzugt handelt es sich bei der strukturierten Oberfläche um einen nach oben ragende Oberfläche. Besonders bevorzugt handelt es sich hierbei um eine ebene Oberfläche. Auf diese Weise kann eine Rutschgefahr eines Benutzers durch die besagte Oberfläche vermieden werden. Insbesondere handelt es sich bei dieser Oberfläche um eine strukturierte Kunststoffoberfläche.

Bei einer weiteren vorteilhaften Ausführungsform ist die Außenform des Gehäuses derart gestaltet, dass bei einer Kontaktierung der Fahrzeugreifen eine Beschädigung des jeweiligen Reifens verhindert wird. Dies kann auf mehrere Weisen erreicht werden. Einerseits ist es möglich, dass den Umfangsrändern des Gehäuses abgerundete Kanten bzw. abgerundete Flächen vorgesehen werden. Auch eine vordere und hintere Oberfläche kann auf diese Weise abgerundet sein. Insbesondere soll verhindert werden, dass es zu einer Beschädigung des Reifens bei einem Auffahren bzw. Anfahren der Vorrichtung kommt. Daneben sollen auch Beschädigungen von Reifen bei einem Lenkvorgang verhindert werden, wobei bei diesem Lenkvorgang der Reifen das Kunststoffgehäuse berührt bzw. an dieses anschlägt.

Bei einer weiteren vorteilhaften Ausführungsform weist die Baueinheit eine insbesondere im Inneren des Gehäuses eine Druckausgleichseinheit und insbesondere eine Druckverteilungsplatte auf. Diese Druckverteilungsplatte kann insbesondere dafür sorgen, dass auf obere Oberfläche des Gehäuses wirkende Kräfte sicher auf einen Boden bzw. nach unten abgeleitet werden. Diese Druckverteilungseinheit dient insbesondere dazu, um die Komponenten im Inneren des Gehäuses vor Überlastung zu schützen.

Bei dieser Druckverteilungsplatte kann es sich beispielsweise um eine Kunststoffplatte und insbesondere eine hochfeste Kunststoffplatte handeln, welche eine flächige Verteilung von Kräften, insbesondere in den (horizontalen) X- und Y- Richtungen bewirkt. Solche Kräfte können etwa auftreten, wenn ein Fahrzeugreifen auf der Vorrichtung steht, wobei die durch diesen Reifen wirkende Masse beispielsweise bei 800 kg liegen kann.

Bei einer weiteren vorteilhaften Ausführungsform weist die Baueinheit eine Kühleinrichtung zum Kühlen wenigstens der Spuleneinrichtung und/oder der Leistungselektronik auf. Es wäre jedoch auch denkbar und ist bevorzugt, dass die Kühleinrichtung auch zum Kühlen anderer Komponenten, etwa von Sensoreinrichtungen oder dergleichen dient.

Bei einer bevorzugten Ausführungsform handelt es sich bei der Kühleinrichtung um eine Flüssigkeitskühleinrichtung. Dies bedeutet, dass der hier beschriebenen Vorrichtung eine Kühlflüssigkeit, beispielsweise Kühlwasser, zugeführt und auch wieder von dieser abgeführt wird. Besonders bevorzugt kann dabei dieses Kühlwasser im Inneren des Gehäuses geführt werden. Alternativ oder zusätzlich könnte jedoch auch eine Luftkühleinrichtung zum Einsatz kommen.

Bei einer besonders bevorzugten Ausführungsform ist das Gehäuse vollständig geschlossen (wobei hier insbesondere die Anschlüsse für Strom und Flüssigkeiten außer Acht bleiben).

Bei einer weiteren bevorzugten Ausführungsform bildet die Kühleinrichtung auch einen der beiden Gehäuseteile des Gehäuses und insbesondere den Bodenteil des Gehäuses aus. Dies bedeutet, dass bevorzugt die Kühleinrichtung an dem anderen Gehäuseteil angeordnet ist, insbesondere an dem Deckel des Gehäuses.

Es wäre jedoch auch denkbar, dass diese Kühleinrichtung in wenigstens einem und bevorzugt in genau einem Gehäuseteil des Gehäuses integriert ist. Bei dieser Ausführungsform ist bevorzugt zusätzlich zu der Kühleinrichtung noch ein zweiter Gehäuseteil und insbesondere ein Boden vorhanden.

Bei einer weiteren vorteilhaften ragt der erste Gehäuseteil wenigstens in der Längenrichtung und/oder der Breitenrichtung über die Kühleinrichtung hinaus. Bevorzugt ragt der erste Gehäuseteil in mehreren Richtungen und bevorzugt in allen Richtungen über die Kühleinrichtung hinaus. Bevorzugt ist damit der Kühleinrichtung in mehreren Richtungen von der ersten Gehäuseeinrichtung umgeben.

Bei einer weiteren vorteilhaften Ausführungsform kann in das Gehäuse auch ein Wärmeleitmittel integriert sein, beispielsweise ein sogenanntes Wärmeleitmittel. Dabei kann es bei dem Wärmeleitmittel um ein aktives oder auch passives Wärmeleitmittel handeln.

Besonders bevorzugt ist derjenige Gehäuseteil, der die Kühleinrichtung aufweist, aus einem Kunststoff gefertigt. Bei einer weiteren bevorzugten Ausführungsform kann ein Körper in einem Gehäuseteil, und insbesondere ein Gehäuseteil aus Kunststoff enthalten sein, der als Kühlung fungiert. Besonders bevorzugt kann es sich hierbei um einen Körper aus Metall handeln, der als Kühlung fungiert.

Besonders bevorzugt kann es sich hierbei um einen Körper, z. B. aus Aluminium handeln, der als Kühlung fungiert.

Bei einer weiteren vorteilhaften Ausführungsform kann auch ein Gehäuseteil selbst, beispielsweise aus einem Metall hergestellt sein, und zumindest teilweise als Kühleinrichtung bzw. Kühlfunktion dienen.

Bei einer weiteren bevorzugten Ausführungsform ist es möglich, dass die Kühleinrichtung aktiv ausgestaltet ist, so dass beispielsweise ein Kühlmedium geführt wird, insbesondere eine Kühlflüssigkeit. Daneben können zur Kühlung auch Peltier-Elemente oder dergleichen vorgesehen sein. Daneben kann die Kühleinrichtung auch passiv gestaltet sein. Daneben wäre es auch denkbar, dass zur Kühlung Ventilationseinrichtungen, etwa Lüfter oder dergleichen, eingesetzt sind.

Bei einer weiteren vorteilhaften Ausführungsform ist auch möglich, dass ein Gehäuseteil, und insbesondere ein Gehäuseteil aus Metall, und insbesondere ein aus Aluminium bestehender Gehäuseteil eloxiert ist, und insbesondere schwarz eloxiert ist. Auf diese Weise kann die Wärmeabfuhr verbessert werden.

Bei einer weiteren vorteilhaften Ausführungsform ist die Kühleinrichtung bezogen auf die Gehäuseoberfläche wenigstens partiell ausgeführt, sie könnte jedoch auch vollflächig ausgeführt sein.

Bei einer weiteren vorteilhaften Ausführungsform ist es auch denkbar, dass der Körper, der als Kühlung fungiert, gleichzeitig die Funktion einer Wärmespreizung übernimmt. Auf diese Weise können beispielsweise vorhandene Hotspots bzw. Bereiche kommen, in denen eine besonders starke Hitzeentwicklung auftritt, entschärft werden, bzw. deren Hitze leichter verteilt werden. Es wäre jedoch auch denkbar, dass ein weiteres Element vorgesehen ist, welches diese Wärmespreizung übernimmt.

Bei einer bevorzugten Ausführungsform weist die Vorrichtung mehrere Anschlüsse auf, und insbesondere mehrere elektrische Anschlüsse und/oder Kühlmedienanschlüsse. Dabei ist es besonders bevorzugt möglich, dass diese Anschlüsse benachbart zueinander und insbesondere an einer bestimmten Seite des Gehäuses angeordnet sind.

Bei einer besonders bevorzugten Ausführungsform weist die Baueinheit eine Schutzeinrichtung zum Schutz von derartigen Anschlüssen und/oder der Anschlusseinrichtung der Baueinheit auf. Bei diesen Anschlüssen kann es sich wie oben erwähnt insbesondere um Kühlanschlüsse, elektrische Anschlüsse, Schnittstellen und/oder Kabelausgänge handeln. Dabei ist es möglich, dass ein derartiger Schutz dieser Anschlüsse durch ein eigenes Bauteil erfolgt, oder durch eine entsprechende Gestaltung wenigstens eines der beiden Gehäuseteile.

So kann es sich beispielsweise bei dieser Schutzreinrichtung um ein entsprechend gestaltetes Kunststoffteil oder auch Metallteil, z. B. Aluminiumteil handeln. Besonders bevorzugt sind jedoch die besagten Anschlüsse an einer Seitenwand des Gehäuses angeordnet, wobei der Begriff Seitenwand hier insbesondere unter Bezugnahme auf einen montierten, insbesondere an einen Boden montierten Zustand des Gehäuses zu verstehen ist.

Bevorzugt kann diese Schutzeinrichtung an einem Gehäuseteil montiert sein. Dabei kann diese Montage bzw. die Verbindung mit dem Gehäuseteil beispielsweise als Schraubverbindung ausgeführt sein. Die Schutzeinrichtung kann jedoch auch durch den jeweiligen Gehäuseteil selbst ausgebildet sein.

Besonders bevorzugt ist eine Körperform bzw. sind die Außenabmessungen dieser Schutzeinrichtungen derart ausgeführt, dass auch im Falle einer Kontaktierung mit einem Fahrzeugreifen dieser nicht beschädigt werden kann.

Bei einer weiteren vorteilhaften Ausführungsform weist die Baueinheit eine Sensoreinrichtung zum Erfassen von Fremdobjekten auf. Hierbei ist zu berücksichtigen, dass während des elektrischen Ladens von Kraftfahrzeugen zum Teil sehr hohe Ströme bzw. magnetische Felder erzeugt werden. Diese magnetischen Felder könnten bei Fremdkörpern zu schweren Beschädigungen der Vorrichtung und auch dieser Fremdkörper führen. Auch könnten sie zur Verletzung von Menschen führen.

Daher ist bevorzugt eine Fremdobjekterkennung vorgesehen, welche das Vorhandensein von Fremdobjekten, das heißt sowohl von Gegenständen als auch von Personen oder Tieren erfassen kann. Bei einer besonders bevorzugten Ausführungsform ist eine derartige Sensoreinrichtung zum Erfassen von Fremdobjekten mit einem Gehäuseteil verbunden.

Bei einer besonders bevorzugten Ausführungsform ist eine derartige Sensoreinrichtung zum Erfassen von Fremdobjekten an einer Trägereinrichtung angeordnet und insbesondere an einer Druckverteilungsplatte, welche eine Verteilung von Kräften ermöglicht. Eine derartige Trägereinrichtung, die auch als Druckverteilungsplatte bezeichnet werden kann, erzeugt eine flächige Verteilung einer von außen einwirkenden insbesondere punktuellen Kraft auf das Gehäuse bzw. auf die Sensoreinrichtung.

Besonders bevorzugt weist die Baueinheit auch eine Positionserfassungseinrichtung auf, welche dazu geeignet und bestimmt ist, eine Position einer weiteren Induktionsvorrichtung und insbesondere in oder an dem Fahrzeug angeordneten Induktionsvorrichtung zu erfassen.

Bei einer weiteren bevorzugten Ausführungsform ist die Aufnahmeeinrichtung zum Aufnehmen der Spuleneinrichtung dazu geeignet und bestimmt, eine definierte Lage der Spuleneinrichtung zu ermöglichen. Auf diese Weise kann eine möglichst genaue Lokalisierung bzw. Positionierung der besagten ersten Spuleneinrichtung erreicht werden, um auf diese Weise eine besonders effiziente Energieübertragung zu ermöglichen.

Bei einer weiteren bevorzugten Ausführungsform weist die Baueinheit eine Ferritkörpereinrichtung auf. Bei der Ferritkörpereinrichtung kann es sich beispielsweise um einen Ferritkern oder Ferritspiegel handeln, der insbesondere zur Übertragung des magnetischen Feldes dient bzw. diese verbessert. Bei diesem Ferritkörper kann es sich insbesondere und nicht ausschließlich um eine Ferritplatte handeln. Diese Ferritkörper kann dabei aus einer Vielzahl von Ferritplattensegmenten bestehen oder solche aufweisen.

Bevorzugt sind diese Ferritkörpersegmente miteinander verbunden und zwar bevorzugt in einer Weise, dass sie mit bezüglich einander in einem bestimmten Maß beweglich und insbesondere schwenkbar sind. Bevorzugt sind diese Ferritkörpersegmente entlang ihrer Kanten miteinander verbunden.

Bei einer bevorzugten Ausführungsform weist die Baueinheit eine Aufnahmeeinrichtung für diese Ferritkörpereinrichtung auf. Dabei kann ein weiteres Bauteil insbesondere aus Kunststoff vorgesehen sein, welches als Aufnahme für die Ferrite dient. Im Folgenden wird dieses Bauteil auch als Spulen-/Ferritkunststoffträger bezeichnet.

Bei einer weiteren bevorzugten Ausführungsform ist dieser Ferrit- bzw. Spulenkunststoffträger derart gestaltet, dass er eine definierte Lage und/oder Aufnahme der Ferritkörpereinrichtung insbesondere auch in Bezug auf die Spuleneinrichtung ermöglicht. Besonders bevorzugt ist die besagte Ferritkörpereinrichtung auch derart angeordnet, dass sie im Wesentlichen (in einem montierten Zustand) horizontal ausgerichtet ist.

Bei einer besonders bevorzugten Ausführungsform dient die besagte Aufnahmeeinrichtung der Ferritkörpereinrichtung auch dazu, um die Spuleneinrichtung elektrisch gegenüber der Ferritkörpereinrichtung zu isolieren. So können etwa Abstandshalter vorgesehen sein, welche einen bestimmten Abstand zwischen der Spuleneinrichtung und der Ferritkörpereinrichtung bewirken.

Bei einer weiteren vorteilhaften Ausführungsform weist die Baueinheit eine Schutzreinrichtung zum Schützen der Ferritkörpereinrichtung auf. Diese Ferritkörpereinrichtung bzw. die Ferritelemente weisen oft eine hohe Sprödheit auf bzw. eine hohe Bruchgefahr bei einer Belastung oder Verformung. Derartige Belastungen können insbesondere durch Kräfte auf das Gehäuse auftreten. Aus diesem Grund sind besonders bevorzugt Elemente der Ferritkörpereinrichtung und insbesondere der Ferritelemente mit einem Schutzelement versehen.

Dabei kann beispielsweise ein Kunststoffmaterial vorgesehen sein, welches diese Ferritkörpereinrichtung wenigstens teilweise umgibt, und welches besonders bevorzugt elastisch ist, um bei möglichen auftretenden Verformungen des Gehäuses durch Kräfte von außen die dabei entstehende Belastung abzuleiten und/oder eine Verformung der Ferritkörpereinrichtung oder einzelner Ferritelemente zu verhindern. Daneben können die Ferritkörpersegmente vor Bruch oder Absplitterung insbesondere von kleinen Partikeln geschützt werden.

Bei einer weiteren bevorzugten Ausführungsform weist die Schutzeinrichtung für die Ferritplattenkörper an wenigstens einer Oberfläche der Ferritkörpereinrichtung einen Schutzfilm bzw. eine Schutzschicht auf. Diese Schutzschicht ist dabei bevorzugt an der betreffenden Oberfläche der Ferritplatten angeklebt.

Bevorzugt ist diese Schutzschicht aus einem flexiblen Material hergestellt, besonders bevorzugt ist diese Schutzschicht aus einem Bitumenmaterial hergestellt. Besonders bevorzugt ist diese Schutzschicht wenigstens einseitig klebend ausgeführt und bevorzugt doppelseitig klebend bzw. adhäsiv ausgeführt. Auf diese Weise kann die Schutzschicht mit einer Seite an den Ferritplatten angeklebt werden und mit der anderen Seite an einem anderen Körper, etwa an einem Trägerelement. Durch die Flexibilität werden die Ferritplatten besser geschützt.

Besonders bevorzugt weist die Schutzeinrichtung für die Ferritplattenkörper auch an einer weiteren, der oben genannten Oberfläche gegenüberliegenden Oberfläche einen Schutzfilm bzw. eine Schutzschicht der oben beschriebenen Art auf.

Bei einer besonders bevorzugten Ausführungsform ist die Ferritkörpereinrichtung segmentiert aufgebaut und auch zwischen den einzelnen Segmenten können elastische Elemente vorgesehen sein, so dass einzelne Elemente der Ferritkörpereinrichtung gegenüber anderen insbesondere schwimmend gelagert sind.

Bei einer weiteren bevorzugten Ausführungsform dient ein Gehäuseteil auch als Aufnahmeeinrichtung zur Aufnahme der Spuleneinrichtung. Insbesondere dient das Bodenteil zur Aufnahme der Spuleneinrichtung.

Bei einer besonders bevorzugten Ausführungsform definiert ein Gehäuseteil die Lage der Spuleneinrichtung in einer vorgegebenen Richtung und insbesondere in einer Z-Richtung, welche besonders bevorzugt senkrecht zu den eingangs genannten Breiten- und Längenrichtungen steht. Besonders bevorzugt handelt es sich bei dem besagten Gehäuseteil um einen Deckelteil des Gehäuses.

Bei einer weiteren vorteilhaften Ausführungsform weist die Baueinheit eine Trägereinrichtung auf, welche sowohl als Trägereinrichtung für die Aufnahmeeinrichtung zum Aufnehmen der Spuleneinrichtung als auch zum Tragen der Ferritkörpereinrichtung dient.

Bei dieser bevorzugten Ausführungsform ist ein einzelnes Bauteil und insbesondere ein Bauteil aus Kunststoff vorgesehen, welches zum Tragen der Spule und Ferritkörpereinheit Kunststoffträger dient. Besonders bevorzugt dient diese Trägereinrichtung auch als Aufnahme für einen Spulenträger mit einer Spuleneinrichtung und/oder den Deckel und/oder auch der Ferritkörpereinrichtung einschließlich der jeweiligen Schutzelemente. Besonders bevorzugt handelt es sich bei dieser Trägereinrichtung um eine zentrale Trägereinrichtung bzw. besonders bevorzugt um eine zentral innerhalb des Gehäuses angeordnete Trägereinrichtung.

Bei einer weiteren vorteilhaften Ausführungsform ist diese Spuleneinrichtung und/oder Ferritkörperträgereinrichtung derart ausgestaltet, dass sie durch eine entsprechende konstruktive Gestaltung eine definierte Lage und/oder Aufnahme für den Spulenträger mit der Spuleneinrichtung und den Deckel und der Ferritkörpereinrichtung mit den Schutzelementen bewirkt.

Bei einer weiteren vorteilhaften Ausführungsform ist diese Trägereinrichtung dazu geeignet und dazu bestimmt, von außen auf die Baueinheit wirkende Kräfte an ein Gehäuseteil und insbesondere an ein Bodenteil zu leiten. Auf diese Weise können besonders effizient die Spulenreinrichtung und/oder die Ferritkörpereinrichtung und/oder die Leistungselektronik im Inneren des Gehäuses geschützt werden.

Bei einer weiteren vorteilhaften Ausführungsform werden durch die vorgesehene vorhandene konstruktive Gestaltung der Spuleneinrichtung und/oder der Ferritkörpereinrichtung und/oder des Kunststoffträgers sowohl die Spuleneinrichtung als auch die Ferritkörpereinrichtung nicht mit in Z-Richtung, das heißt senkrecht zu der Breiten- und Höhenrichtung wirkenden Kräften belastet.

Besonders bevorzugt sind diese Spuleneinrichtung und Ferritkörperträgereinrichtung gemeinsam mit der Spuleneinrichtung und/oder gemeinsam mit der Spulenträgereinrichtung und/oder dem Deckel und der Ferritkörpereinrichtung insbesondere mit deren Schutzelementen in der Gehäuseeinrichtung integriert.

Bei einer bevorzugten Ausführungsform kann eine Lagerung der Spuleneinrichtung und/oder der Ferritkunststoffkörpereinrichtung in dem Gehäuse an einem oder mehreren und insbesondere an einzeln definierten Lagerpunkten und/oder auch vollständig umlaufend erfolgen.

Bei einer weiteren besonders bevorzugten Ausführungsform ist die Trägereinrichtung zum Tragen der Spuleneinrichtung und/oder der daran angeordneten elektronischen Steuerungseinrichtung aus einem Kunststoff gefertigt.

Bei dieser Steuerungseinrichtung kann es sich insbesondere auch um eine Leistungselektronik der hier beschriebenen Vorrichtung handeln. Insbesondere handelt es sich hierbei um die Elektronik, welche zur Ansteuerung der Spuleneinrichtung dient und insbesondere auch dazu, um die Spuleneinrichtung mit geeigneten Strömen zu versorgen.

Bei einer bevorzugten Ausführungsform weist diese Trägereinrichtung wenigstens eine Kammer zu Unterbringung von Komponenten der Baueinheit auf. Bei den Komponenten handelt es sich insbesondere um eine Elektronikeinheit, eine Steuerungseinrichtung, die oben erwähnte Spuleneinrichtung und/oder die Ferritkörpereinrichtung.

Bei einer besonders bevorzugten Ausführungsform weist diese Trägereinrichtung auch eine zweite Kammer zur Unterbringung von Komponenten der Baueinheit auf. Hierbei kann es sich wiederum um die besagten Komponenten wie die Spuleneinrichtung und/oder die Ferritkörpereinrichtung handeln.

Bei einer bevorzugten Ausführungsform sind diese erste Kammer und die zweite Kammer voneinander wenigstens teilweise und besonders bevorzugt vollständig abgegrenzt. Bevorzugt sind diese beiden Kammern auch vollständig voneinander abgegrenzt. Bei einer weiteren bevorzugten Ausführungsform befindet sich in einer der genannten Kammern, insbesondere die Spulenträgereinrichtung mit der Spuleneinrichtung und/oder ein Bereich der Deckeleinrichtung bzw. des Gehäuseteils und/oder der Ferritkörpereinrichtung.

Besonders bevorzugt befindet sich in der anderen bzw. zweiten Kammer die Steuerungseinrichtung. Diese Steuerungseinrichtung kann dabei insbesondere eine Platine aufweisen, an der elektronische Elemente und insbesondere leistungselektronische Elemente angeordnet sind.

Bei einer weiteren bevorzugten Ausführungsform weist die Baueinheit eine Schutzeinrichtung und insbesondere einen Schutzrahmen auf, der wenigstens abschnittsweise elektronische Komponenten der Baueinheit umgibt. Insbesondere umgibt diese Schutzreinrichtung bzw. dieser Schutzrahmen eine Platine, auf der wiederum elektronische Komponenten angeordnet sind.

Bei einer besonders bevorzugten Ausführungsform ist dieser Schutzrahmen aus einem Kunststoff hergestellt. Besonders bevorzugt ist dieser Schutzrahmen auch mit der Trägereinrichtung für die Spuleneinrichtung und/oder die Ferritkörpereinrichtung verbunden.

Bei einer besonders bevorzugten Ausführungsform dient dieser Schutzrahmen zur Aufnahme und/oder zur Lagerung einer oder mehrerer Platinen.

Besonders bevorzugt ermöglicht dieser Schutzrahmen aufgrund seiner konstruktiven Ausgestaltung den Schutz einer Platine und/oder mehrerer Platinen, insbesondere auch der elektronischen Bauteile und dies insbesondere während Montagearbeiten, beispielsweise während der Fixierung von Kabelschuhen in einem Anschlussfeld.

Bei einer bevorzugten Ausführungsform kann die Platine oder die Platinen mithilfe des Schutzrahmens einen definierten Abstand zu einem bestimmten Gehäuseteil, beispielsweise dem Bodenteil oder dem Deckelteil aufweisen. Auf diese Weise ist es insbesondere möglich, die vorgeschriebenen Luft- und Kriechstrecken einzuhalten.

Bei einer weiteren vorteilhaften Ausführungsform ist zwischen der elektronischen Steuerungseinrichtung und wenigstens einem Gehäuseteil ein Zwischenraum ausgebildet. Dieser Zwischenraum ist aber bevorzugt größer als 1 mm, bevorzugt größer als 2 mm, bevorzugt größer als 4 mm, bevorzugt größer als 5 mm, bevorzugt größer als 6 mm

Bei einer weiteren Ausführungsform ist dieser Zwischenraum kleiner als 5 cm, besonders bevorzugt kleiner als 4 cm, bevorzugt kleiner als 3 cm, bevorzugt kleiner als 2 cm.

Bei einer weiteren vorteilhaften Ausführungsform ist in diesem Zwischenraum wenigstens abschnittsweise eine Substanz und insbesondere eine pastöse Substanz angeordnet. Mit anderen Worten kann in einem definierten Zwischenraum und/oder Abstand der Platine beispielsweise zu einem Gehäuseteil aus Aluminium eine sogenannte Wärmeleitpaste angeordnet sein. Eine so applizierte Wärmeleitpaste kann eine Wärmespreizung bewirken. Auf diese Weise kann die entstehende Wärme auf einen gesamten Gehäuseteil, beispielsweise einem Aluminiumgehäuseteil verteilt werden. Auch ist auf diese Weise leichter eine Wärmeabführung an das Gehäuseteil, beispielsweise ein Aluminiumgehäuseteil, möglich.

Daneben kann die Wärmeleitpaste auch die Funktion einer Vibrationsdämpfung der Platine und/oder Platinen wahrnehmen. Auf diese Weise können die Platine und/oder Platinen und oder auch die sich auf diesen Platinen befindlichen elektronischen Bauteile geschützt werden. Besonders bevorzugt ist an einer Unterseite der Platine oder der Platinen und insbesondere zwischen der Platine/den Platinen und einem Schutzrahmen ebenfalls eine Wärmeleitpaste aufgebracht. Heftige Vibrationen können beispielsweise entstehen, wenn von außen auf das Gehäuse einwirkende Kräfte auftreten, beispielsweise beim Transport der Vorrichtung in einem Lkw oder auch bei einer Bewegung eines Fahrzeugs selbst.

Die verwendete Paste und insbesondere Wärmeleitpaste hat bevorzugt weiterhin die Eigenschaft, dass sie dauerhaft paströs ist. Auf diese Weise kann auch die Funktion der Vibrationsdämpfung durch die Wärmeleitpaste aufrechterhalten werden. Besonders bevorzugt ist daher diese Wärmeleitpaste zwischen einer oder mehreren Platinen und einem weiteren Wandungsabschnitt, etwa einem Wandungsabschnitt des Bodenteils angeordnet.

Bei einer weiteren bevorzugten Ausführungsform weist die Baueinheit eine Verdrehschutzeinrichtung für Kabelzuführungen auf. Besonders bevorzugt kann diese Verdrehschutzeinrichtung in den oben erwähnten Schutzrahmen integriert sein.

Durch entsprechende konstruktive Ausführungsform kann auf diese Weise ein Verdrehschutz für Kabelschuhe erreicht werden. Auf diese Weise wiederum kann eine dauerhaft definierte Lage der einzelnen Kabelschuhe und/oder Kabel zueinander erreicht werden.

Dieser Verdrehschutz kann dabei insbesondere auch während einer Befestigungsphase von Kabelschuhen verwendet werden.

Bei einer weiteren vorteilhaften Ausführungsform weist die Baueinheit eine Führungseinrichtung zu wenigstens abschnittsweise Führung wenigstens einer Litze der Spuleneinrichtung auf. Dabei können beispielsweise umlaufende Nuten vorgesehen sein, in welche die Spuleneinrichtung eingelegt werden kann. Diese Führungseinrichtung kann dabei wiederum einen zusätzlichen Schutz für die Spuleneinrichtung bewirken.

Besonders bevorzugt ist in diesem Schutzrahmen auch eine definierte Führung der Litze bzw. der Spuleneinrichtung und/oder deren Spulenende integriert.

Auch auf diese Weise ist es möglich, vorgeschriebene Luft- oder Kriechstrecken einzuhalten.

Durch die konstruktive Gestaltung des Schutzrahmens können an entsprechenden Stellen die vorgeschriebenen Luft- und Kriechstrecken insbesondere gegenüber anderen Bauteilen eingehalten werden.

Die vorliegende Erfindung ist weiterhin auf eine Ladeanordnung für Kraftfahrzeuge mit einer ersten Induktionsvorrichtung gerichtet, welche insbesondere stationär angeordnet ist, sowie einer zweiten Induktionsvorrichtung, welche an dem Kraftfahrzeugt montierbar ist, wobei die erste Induktionsvorrichtung eine erste Spuleneinrichtung aufweist und die zweite Induktionsvorrichtung eine zweite Induktionsvorrichtung aufweist und die erste Spuleneinrichtung und die zweite Spuleneinrichtung zur induktiven Energieübertragung geeignet und bestimmt sind, und wobei die zweite Induktionsvorrichtung eine Steuerungseinrichtung aufweist, welche dazu geeignet und bestimmt ist, von der zweiten Spuleneinrichtung ausgegebene Ströme gesteuert in eine Last auszugeben.

Erfindungsgemäß weist die erste Induktionsvorrichtung eine elektronische Baueinheit der oben beschriebenen Art auf oder ist eine derartige elektronische Baueinheit.

Weitere Vorteile und Ausführungsformen ergeben sich aus den beigefügten Zeichnungen. Darin zeigen:
- Fig. 1: eine Ansicht eines ersten Gehäuseteils einer erfindungsgemäßen Baueinheit;
- Fig. 2: eine Ansicht eines zweiten Gehäuseteils einer erfindungsgemäßen Baueinheit;
- Fig. 3: eine Seitenansicht einer erfindungsgemäßen Baueinheit;
- Fig. 4: eine Detailansicht der in Fig. 3 gezeigten Darstellung;
- Fig. 5: eine weitere Detailansicht der in Fig. 3 gezeigten Darstellung;
- Fig. 6: eine Detailansicht der in Fig. 4 gezeigten Darstellung;
- Fig. 7: eine Detailansicht der erfindungsgemäßen Baueinheit;
- Fig. 8: eine Darstellung einer Kühleinrichtung;
- Fig. 9: eine Darstellung der Anschlusseinheit für eine erfindungsgemäße Baueinheit;
- Fig. 10: eine weitere Darstellung der in Fig. 9 gezeigten Anschlusseinrichtung;
- Fig. 11: eine Darstellung zur Anordnung eines Sensors zur Erkennung von Fremdobjekten;
- Fig. 12: eine Darstellung einer Sensorplatine (zur Erkennung von Fremdobjekten);
- Fig. 13: eine weitere Schnittdarstellung mit der Darstellung der elektronischen Komponenten;
- Fig. 14: eine Darstellung zur Veranschaulichung der Spuleneinrichtung und des Spulenträgers;
- Fig. 15: eine Darstellung zur Veranschaulichung des Spulenträgers;
- Fig. 16: eine Schnittdarstellung der Baueinheit einschließlich Spule und Spulenträger;
- Fig. 17: eine weitere Darstellung der Trägereinheit für Elektronikkomponenten; und
- Fig. 18: eine Darstellung einer erfindungsgemäßen Ladenanordnung.

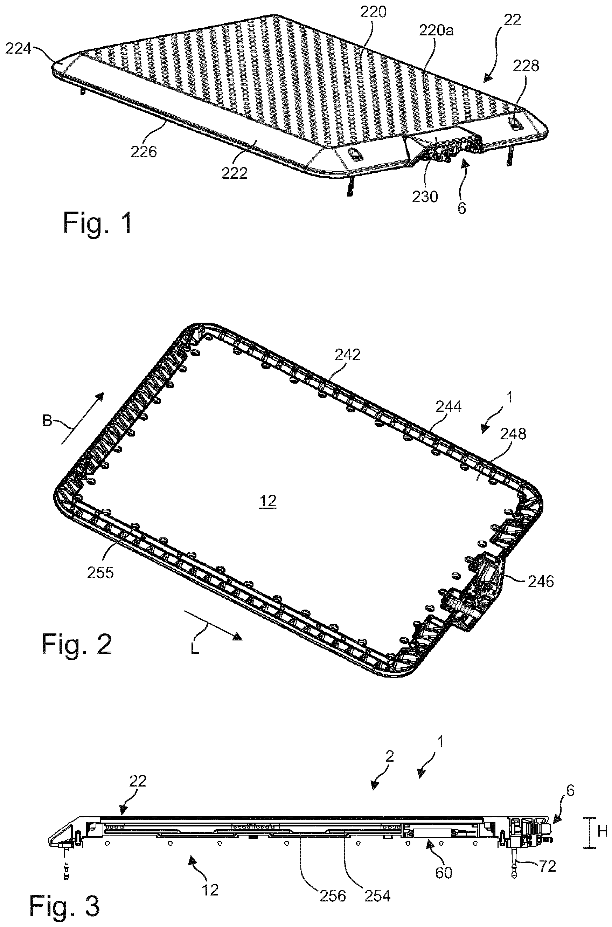

Figur 1 zeigt eine Ansicht auf ein erstes Gehäuseteil 22 für eine erfindungsgemäße Baueinheit. Dieses Gehäuseteil 22 weist dabei eine Oberfläche bzw. Trittoberfläche 220 auf. Diese Oberfläche weist dabei eine Strukturierung 220a auf, welche dazu dient, ein Rutschen von Benutzern zu verhindern. Das Bezugszeichen 224 kennzeichnet eine abgerundete Ecke und das Bezugszeichen 222 eine abgerundete Kante. Durch diese Abrundungen kann verhindert werden, dass ein Reifen beim Auffahren oder Anfahren an den Gehäuseteil 22 beschädigt wird.

Das Bezugszeichen 226 kennzeichnet eine umlaufende Schutzkante, welche insbesondere dafür geeignet und bestimmt ist, eine umlaufende Dichtung zwischen diesem Gehäuseteil 22 und dem zweiten Gehäuseteil 24 (siehe unten) zu verhindern. Diese Schutzkante kann auch als Tropfkante wirken, um die in dem Gehäuse angeordneten Komponenten zu schützen. Das Bezugszeichen 228 kennzeichnet eine Ausnehmung, in welche ein Schraubkörper einführbar ist. Mit diesem Schraubkörper kann dieser Gehäuseteil an einem weiteren Gehäuseteil befestigt werden und letztlich auch an einem Boden oder anderen Einrichtungen montiert werden.

Das Bezugszeichen 230 kennzeichnet eine Schutzeinrichtung, genauer einen oberen Teil dieser Schutzeinrichtung, welche zum Schutz mit einer mit 6 bezeichneten Anschlusseinrichtung dient. Diese Schutzeinrichtung 230 ist dabei mit abgerundeten Kanten ausgeführt, sodass auch durch sie ein Reifen nicht beschädigt werden kann.

Bevorzugt wird der erste Gehäuseteil 22 so montiert, dass Anschlusseinrichtung 6 in eine Fahrtrichtung eines zu ladenden Kraftfahrzeugs weist. Durch diese Anordnung kann günstigerweise verhindert werden, dass die Schutzeinrichtung 230 mit einem Reifen in Kontakt kommt.

Figur 2 zeigt eine Ansicht auf den zweiten Gehäuseteil 12. Dieser Gehäuseteil 12 fungiert gleichzeitig auch als Kühleinrichtung weist einen Umfangsrand 242 auf. Daneben können Verstärkungsstege oder Verstärkungsrippen 244 vorgesehen sein. Das Bodenteil 12 kann dabei aus einem Kunststoff oder auch aus einem Metall wie insbesondere aber nicht ausschließlich Aluminium gefertigt sein.

Das Bezugszeichen 246 kennzeichnet den unteren Abschnitt der Schutzeinrichtung für die Anschlusseinrichtung 6. Dieser untere Teil 246 wirkt mit dem Abschnitt 230 zusammen und bildet so insgesamt die Schutzeinrichtung. Die beiden Gehäuseteile sind bezüglich einander bevorzugt schwimmend gelagert. Das Bezugszeichen 255 bezieht sich auf Öffnungen, welche in dem zweiten Gehäuseteil angeordnet sind und welche zur schwimmenden Lagerung dienen. In einem montierten Zustand kann die Baueinheit mit der Oberfläche 248 des Gehäuseteils 12 auf einem Boden aufliegen.

Man erkennt, dass der erste Gehäuseteil in allen Richtungen über den zweiten Gehäuseteil hinausragt.

Das Bezugszeichen L in Figur 2 bezieht sich auf eine Längenrichtung und das Bezugszeichen B auf eine Breitenrichtung der Gehäuseteile und damit auch der gesamten Baueinheit. Figur 3 zeigt eine Schnittdarstellung einer erfindungsgemäßen Baueinheit. Dabei bezieht sich das Bezugszeichen 2 auf das Gehäuse in seiner Gesamtheit, welches wiederum die beiden Gehäuseteile 22 und 12 aufweist. Das Bezugszeichen 72 bezieht sich auf eine Befestigungseinrichtung, wie etwa einem Schraubkörper, mit dem die Baueinheit 1 an einem Boden oder ähnlichen befestigt werden kann. Bevorzugt sind wenigstens 4 derartige Befestigungseinrichtungen vorgesehen.

Das Bezugszeichen 60 kennzeichnet eine Kammer zur Aufnahme einer Elektronikeinheit. Diese Kammer 60 erstreckt sich dabei nur entlang eines Teils der gesamten Länge der Baueinheit.

Man erkennt weiterhin, dass die Baueinheit eine bestimmte Längsausdehnung in der Richtung L und eine bestimmte Breitenausdehnung in der Richtung B aufweist. Dagegen ist eine Höhenausdehnung H sehr klein ausgestaltet, das heißt die Baueinheit ist insgesamt eine sehr flache Baueinheit, welche bevorzugt nur gering aus einem Boden herausragt.

Die Bezugszeichen 256 und 254 kennzeichnen zwei Ferritplatten einer Ferritplattenanordnung. Man erkennt in Fig. 3, das einander benachbarte Ferritplatten in der Höhenrichtung bezüglich einander versetzt und auch in der Längsrichtung überlappend angeordnet sind. In dem Gehäuseteil bzw. der Kühleinrichtung 12 sind Ausnehmungen angeordnet, welche diese versetzte Anordnung der Ferritplatten begünstigen.

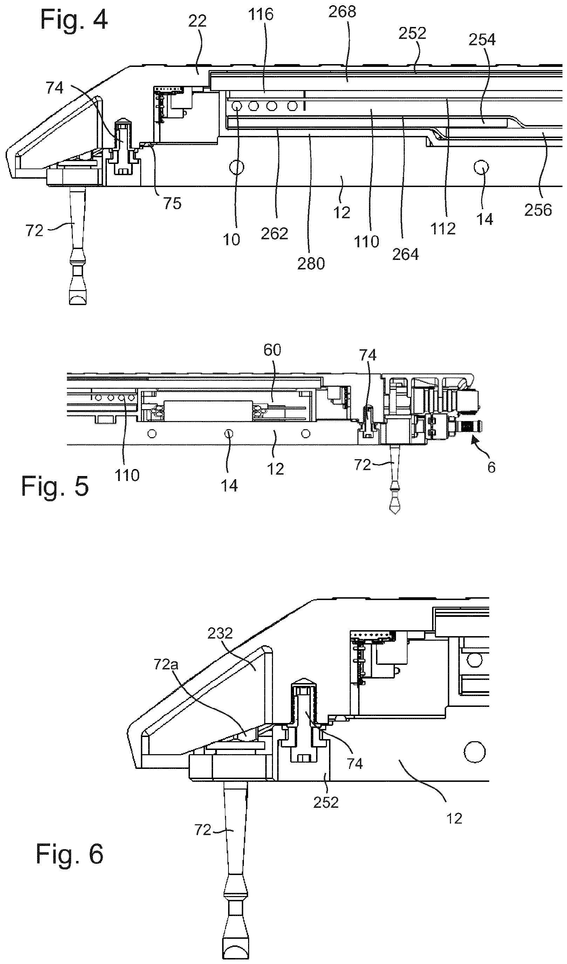

Figur 4 zeigt eine Detaildarstellung der in Figur 3 gezeigten Baueinheit. Dabei ist wieder die Befestigungseinrichtung 72 vorgesehen. Ein weiterer Befestigungskörper 74, wie insbesondere eine Schraube dient dazu, um die beiden Gehäuseteile 22 und 12 aneinander zu befestigen. Zwischen diesen beiden Gehäuseteilen ist eine nur teilweise dargestellte Dichtungseinrichtung 75 erkennbar.

Die Bezugszeichen 254 und 256 kennzeichnen Bestandteile einer Ferritkörpereinrichtung, genauer gesagt die oben erwähnten Ferritplatten, welche ebenfalls in einem Gehäuse untergebracht ist. Das Bezugszeichen 252 kennzeichnet eine Sensoreinrichtung und insbesondere eine Sensoreinrichtung zur Fremdobjekterkennung. Diese ist direkt unterhalb der Oberfläche des ersten Gehäuseteils 22 angeordnet.

Das Bezugszeichen 268 bezieht sich auf eine Trägerplatte bzw. Druckplatte, die unterhalb der Sensoreinrichtung 252 angeordnet ist und welche die Sensoreinrichtung 252 flächig stützt. Diese Trägerplatte kann selbst wiederum mittels Stützstegen abgestützt sein.

Dabei ist es möglich und bevorzugt, dass diese Trägerplatte 268 und die Sensorplatine miteinander verklebt sind. Auch kann bevorzugt die Sensorplatine 252 mit dem Gehäuseteil 22 verklebt sein.

Das Bezugszeichen 262 bezieht sich auf eine erste Schutzschicht, welche an den Ferritplatten 252 und 254 angeordnet und insbesondere angeklebt ist. Das Bezugszeichen 264 bezieht sich auf eine zweite Schutzschicht, welche ebenfalls an den Ferritplatten 252 und 254 angeordnet und insbesondere angeklebt ist. Auf diese Weise sind bevorzugt die Ferritplatten zwischen den beiden Schutzschichten 262 und 264 gesandwiched.

Das Bezugszeichen 110 kennzeichnet einen Spulenträger, der zum Tragen der Spuleneinrichtung 10 dient. Diese Spuleneinrichtung kann dabei, wie unten genauer erläutert, in entsprechenden Nuten des Spulenträgers 110 einliegen. Oberhalb des Spulenträgers 110 ist eine Abdeckplatte 112 angeordnet, welche bevorzugt aus einem Kunststoff gefertigt ist und welche die Spuleneinrichtung 10 abdeckt. Das Bezugszeichen 116 kennzeichnet einen oberhalb dieser Abdeckplatte 112 angeordneten Freiraum.

Das Bezugszeichen 12 kennzeichnet das Bodenteil, welches gleichzeitig auch als Kühleinrichtung fungiert. Das Bezugszeichen 14 kennzeichnet Kühlmittelkanäle, welche in der Kühleinrichtung angeordnet sind und zum Leiten eines Kühlmittels dienen. Diese Kühlmittelkanäle können insbesondere von einem (nicht gezeigten) Zentralkanal mit dem Kühlmittel versorgt werden.

Das Bezugszeichen 280 kennzeichnet eine Hauptträgereinrichtung, welche zum Tragen sowohl des Spulenträgers mit der Spuleneinrichtung 10 dient als auch zum Tragen der Ferritkörper 254, 256.

Figur 5 zeigt eine weitere Detailansicht der in Figur 3 gezeigten Vorrichtung. Hier ist insbesondere die Anschlusseinrichtung 6 erkennbar. Der zweite Gehäuseteil 24 kann insbesondere auch zur Wärmeabführung dienen. Das Bezugszeichen 60 kennzeichnet eine Kammer, in welcher Elektronikkomponenten, wie etwa eine Leistungselektronik angeordnet sind.

Man erkennt auch wieder die Befestigungseinrichtung, welche zur schwimmenden Lagerung der beiden Gehäuseteile 12 und 22 bezüglich einander dient. Weiterhin ist erkennbar, dass die Kammer mit den Elektronikkomponenten seitlich neben dem Spulenträger 110 angeordnet ist.

Figur 6 zeigt eine weitere Teildarstellung der in Figur 4 gezeigten Vorrichtung. Hier ist die Befestigungseinrichtung 72 dargestellt, wobei hier auch ein Schraubkopf 72a erkennbar ist. Dieser Schraubkopf 72a kann in einem insgesamt mit 232 gekennzeichneten Raum angeordnet sein, der wiederum nach Verschrauben des Objekts abgedeckt und verschlossen werden kann. Auf diese Weise kann, wie oben erwähnt, auch Vandalismus entgegengewirkt werden.

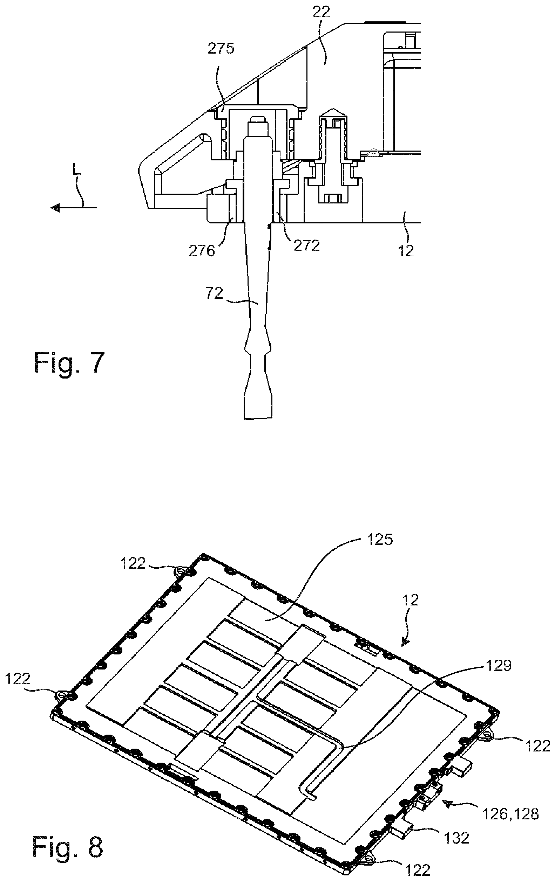

Figur 7 zeigt eine weitere Darstellung der Baueinheit 1, wobei hier insbesondere die Anordnung der Befestigungseinrichtung 72 dargestellt ist. Diese wird mit einer Hülse 272 in einer Öffnung 276 geführt und ist, wie in Figur 7 erkennbar, schwimmend gelagert. Das heißt, die Befestigungseinrichtung erlaubt eine Bewegung der Baueinheit in der Richtung L sowie auch in einer hierzu senkrechten Richtung. Auf diese Weise wird eine schwimmende Lagerung der Baueinheit, beispielsweise gegenüber dem Boden, ermöglicht.

Das Bezugszeichen 275 kennzeichnet eine Schutzhülse für die Verschraubung. Diese Schutzhülse verhindert ein Eintreten von z.B. Schmutz von oben in den Schraubpunkt.

Figur 8 zeigt in ihrer Gesamtheit eine Kühleinrichtung 12. Diese Kühleinrichtung kann hier in der Art ausgeführt sein, welche beispielsweise mit Laschen oder Befestigungsmitteln 122 am Boden befestigbar ist.

Das Bezugszeichen 129 kennzeichnet eine Nut, in der eine Litze der Spuleneinrichtung verlaufen kann. Die Kühleinrichtung weist eine Vielzahl von hier rechteckigen Ausnehmungen auf, in der der Ferritplatten einliegen können. Auf diese Weise wird die überlappende Anordnung der Ferritplatten ermöglicht.

Das Bezugszeichen 132 kennzeichnet Schächte für Schnittstellen, insbesondere für elektrische Schnittstellen. Zentral sind die Anschlüsse 126, 128 für das Kühlmittel vorgesehen

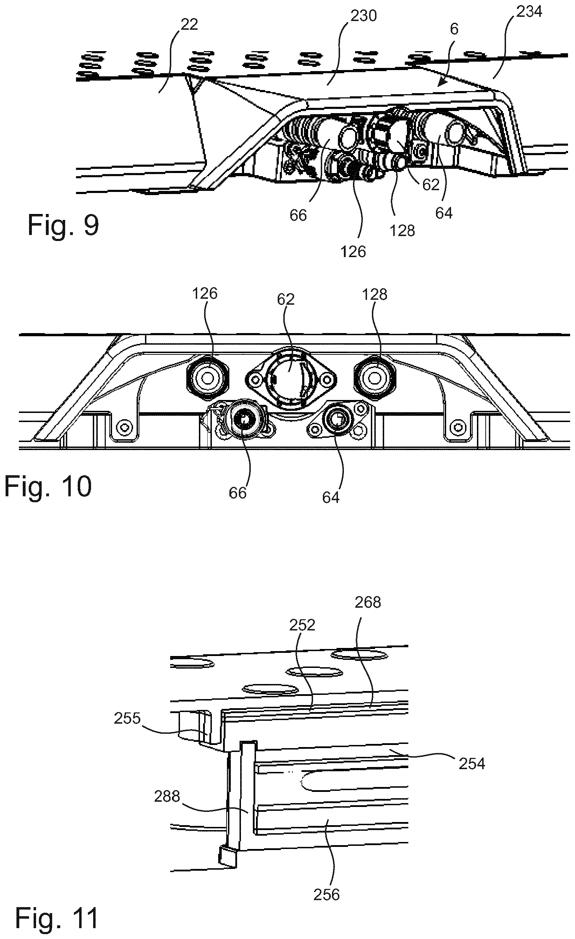

Figur 9 zeigt eine weitere Darstellung der Baueinheit 1, wobei hier auch die in ihrer Gesamtheit mit 6 bezeichnete Anschlusseinrichtung dargestellt ist. Die Bezugszeichen 126 und 128 beziehen sich auf Kühlmittelanschlüsse, über welche ein Kühlmittel, wie beispielsweise Wasser, zugeführt und auch wieder abgeführt werden kann. Das Bezugszeichen 62 kennzeichnet einen Stromanschluss, mittels dessen die Baueinheit beispielsweise an einem elektrischen Stromnetz angeschlossen werden kann. Das Bezugszeichen 64 und 66 kennzeichnet weitere elektrische Verbindungseinrichtungen, beispielsweise Schnittstellen für weitere Steuerungseinrichtungen.

Man erkennt hier auch die Schutzeinrichtung 230, welche in ihrer Gesamtheit die einzelnen Anschlüsse 62, 64, 66 und 126 und 128 schützt.

Fig. 10 zeigt eine Frontansicht der in Figur 9 gezeigten Anschlusseinrichtung 6. Man erkennt hier wiederum die Anschlüsse 62, 64, 66, 126 und 128.

Figur 11 zeigt eine weitere Detaildarstellung der erfindungsgemäßen Baueinheit. Dabei bezieht sich das Bezugszeichen 252 wiederum auf eine Sensoreinrichtung zur Objekterkennung. Oberhalb dieser Einrichtung 252 ist ein Schutzelement 253 angeordnet. Das Bezugszeichen 255 kennzeichnet einen Steg, der auch zum Halten der Sensoreinrichtung 252 dient.

Unterhalb der Sensoreinrichtung 252 sind Stützelemente vorgesehen.

Das Bezugszeichen 258 kennzeichnet einen Kraftübertragungssteg, der dazu dient, Kräfte, die auf den ersten Gehäuseteil wirken, hier vertikal nach unten abzuleiten. Dieser Steg 288 ist Bestandteil der bereits in Fig. 4 gezeigten Haupträgereinrichtung 280. Der Steg kann dabei in eine Nut in dem Trägerteil 268 einrasten.

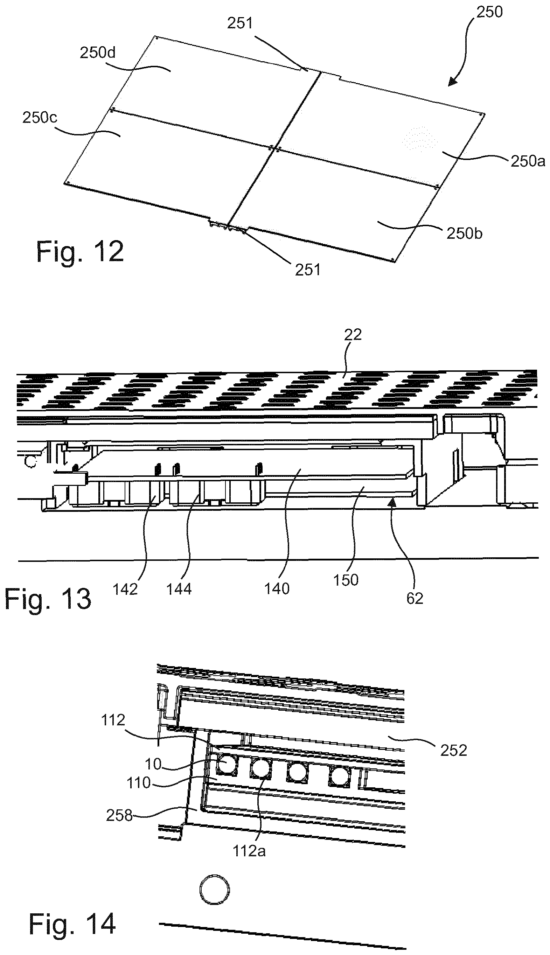

Figur 12 zeigt die Sensorplatine. Diese Sensorplatine 250 weist hier vier Segmente 250a, b, c, d auf. Das Bezugszeichen 251 kennzeichnet einen Steckeranschluss für die Sensorplatine.

Figur 13 zeigt eine weitere Ausgestaltung der erfindungsgemäßen Baueinheit. Bei dieser Ausgestaltung ist eine Kammer 60 erkennbar, in welche die Elektronikeinheiten 142 und 144, die hier jeweils an einer Platine 140 angeordnet sind, angeordnet sein können. In diesem Bereich kann auch eine (nicht gezeigte) Wärmeleitpaste vorgesehen sein, die insbesondere auch von den Elektronikeinheiten abgegebene Wärme verteilen kann.

Figur 14 zeigt eine weitere Darstellung der erfindungsgemäßen Baueinheit. Hier ist ein Spulenträger 110 vorgesehen, der Ausnehmungen 112a aufweist, in denen jeweils Windungen der Spuleneirichtung 10 einliegen. Auf diese Weise kann auch die Spuleneinrichtung 10 geschützt werden. Oberhalb der Spuleneinrichtung 10 ist ein Abdeckelement bzw. eine Abdeckplatte 112 vorgesehen. Unterhalb des Spulenträgers 110 ist eine Ferritkörpereinrichtung vorgesehen

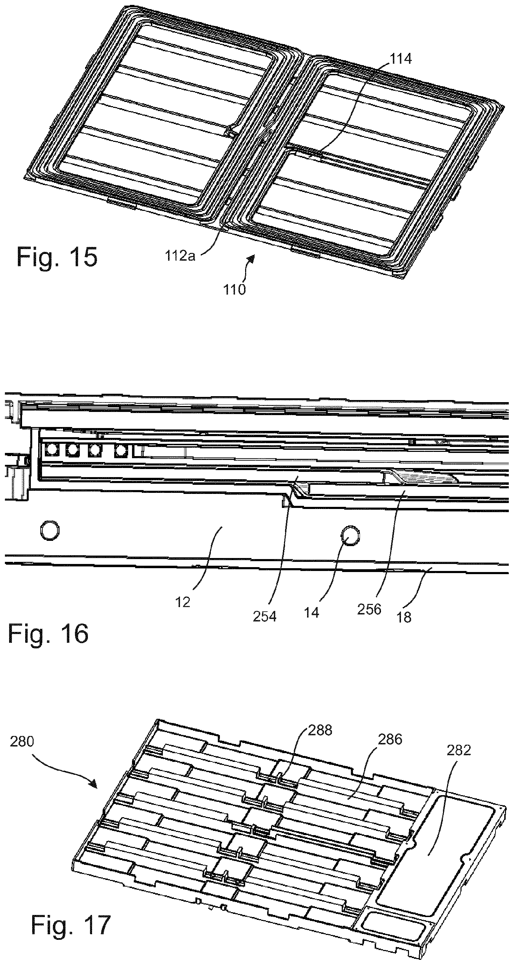

Figur 15 zeigt eine Darstellung dieses Spulenträgers 110. Dieser weist hier wiederum die oben gekennzeichneten Nuten 112a auf, in denen die (nicht gezeigte Spule) einliegen kann. Das Bezugszeichen 114 kennzeichnet eine Nut, die zur Aufnahme eines Endabschnitts der Spuleneinrichtung geeignet und bestimmt ist. Der in Fig. 15 gezeigte Spulenträger ist hier für zwei Spuleneinrichtungen ausgelegt. Es können jedoch auch Spulenträger für mehr als zwei Spuleneinrichtungen oder auch nur für eine Spuleneinrichtung vorgesehen sein.

Fig. 16 zeigt eine weitere Teildarstellung der Baueinheit. Im Unterschied zu der in Fig. 4 gezeigten Ausgestaltung ist hier unterhalb der Kühleinrichtung noch ein Gehäuseteil 18 angeordnet. Dies bedeutet, dass bei der in Fig. 16 gezeigten Ausgestaltung die Kühleinrichtung vollständig innerhalb eines Gehäuses angeordnet ist. Dieser Gehäuseteil kann hierbei aus einem Kunststoff aber auch aus einem Metall bestehen.

Fig. 17 zeigt die Hauptträgereinheit 280. Diese weist eine Aufnahmefläche 282 auf, welche gleichzeitig auch die oben erwähnte Kammer begrenzt. Weiterhin begrenzt die Hauptträgereinheit nach unten hin auch eine Kammer, in welcher die Ferritkörper und auch die Spuleneinrichtung 10 angeordnet sind.

Die Bezugszeichen 286 und 288 kennzeichnen Stützstege bzw. Kraftübertragungsstege, welche Belastungen, welche auf eine Oberfläche der Baueinheit einwirken direkt an die Hauptträgereinrichtung 280 und damit an die Kühleinrichtung 12 weiterleiten. Die Hauptträgereinrichtung 280 ist, wie oben erwähnt, bevorzugt aus einem Kunststoff hergestellt.

Bei der Hauptträgereinheit kann es sich bevorzugt um einen Kunststoffkörper handeln. Bevorzugt ist in diesen Körper wenigstens ein Element eingelegt, insbesondere eine Spuleneinrichtung, ein Spulenträger, Ferritkörpereinrichtungen und/oder Ferritplatten, und/oder die Abdeckplatte 112

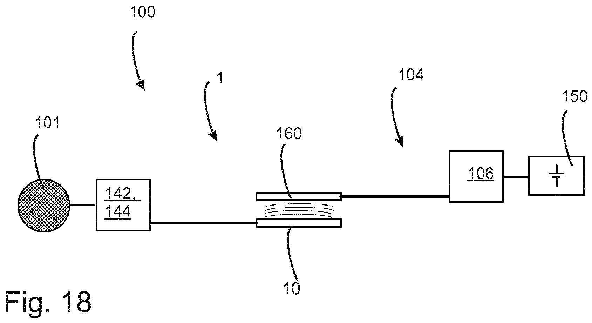

Fig. 18 zeigt grob schematisch eine schematische Darstellung einer Ladeanordnung 100. Dabei ist die hier beschriebene Baueinheit 1 an ein Stromnetz 101 angeschlossen. Die Baueinheit 1 weist die Steuereinrichtung bzw. Elektronikeinheit 142, 144 sowie die Spuleneinrichtung 10 auf. Die Spuleneinrichtung 10 versorgt induktiv eine zweite Spuleneinrichtung 160 mit Energie.

Die zweite Spuleneinrichtung ist Bestandteil einer zweiten Induktionsvorrichtung, welche insbesondere an oder in einem KFZ montiert ist. Über eine Elektronikeinheit 106 wird eine Last 150, wie insbesondere aber nicht ausschließlich eine KFZ Batterie versorgt und insbesondere geladen.

### Bezugszeichenliste

- 1: Baueinheit
- 2: Gehäuse
- 6: Anschlusseinrichtung
- 10: Spuleneinrichtung
- 12: Kühleinrichtung
- 14: Kühlmittelkanäle
- 22: erstes Gehäuseteil
- 24: zweite Gehäuseteil
- 60: Kammer
- 62: Stromanschluss
- 64,66: Kühlmittelanschluss
- 72: Befestigungseinrichtung
- 72a: Schraubkopf
- 74: Befestigungskörper
- 75: Dichtungseinrichtung
- 100: Ladeanordnung
- 101: Stromnetz
- 104: zweite Induktionsvorrichtung
- 106: Elektronikeinheit
- 110: Spulenträger
- 112: Abdeckplatte
- 112a: Ausnehmungen
- 114: Nut
- 116: Freiraum
- 122: Befestigungsmittel, Lasche
- 125: Ausnehmungen
- 126: Elektrische Verbindungsanordnung
- 128: Elektrische Verbindungsanordnung
- 132: Schächte für Schnittstellen
- 140: Platine
- 142, 144: Elektronikeinheit
- 150: Last
- 160: zweite Spuleneinrichtung
- 220: Trittoberfläche
- 220a: Strukturierung
- 222: abgerundete Kante
- 224: abgerundete Ecken
- 226: umlaufende Schutzkante
- 228: Ausnehmung
- 230: Schutzeinrichtung (oberer Teil)
- 232: Raum
- 242: Umfangsrand
- 244: Verstärkungsrippen
- 246: unterer Abschnitt der Schutzeinrichtung
- 248: Oberfläche
- 250: Sensorplatine
- 250a-d: Segmente der Sensorplatine 250
- 251: Steckeranschluss
- 252: Sensoreinrichtung zur Fremdkörpererkennung
- 254: Ferritkörpereinrichtung
- 255: Steg
- 256: Ferritkörpereinrichtung

- 262: Schutzschicht
- 264: Schutzschicht
- 268: Trägerplatte
- 272: Hülse
- 275: Schutzhülse
- 276: Öffnung
- 280: Hauptträgereinrichtung
- 288: Kraftübertragungssteg
- L: Längenrichtung
- B: Breitenrichtung
- H: Höhenrichtung

## Patentansprüche

1. Elektrische Baueinheit (1) zur induktiven Ladestromübertragung für Kraftfahrzeuge mit einem Gehäuse (2) innerhalb dessen wenigstens ein elektrische Spuleneinrichtung (10) zur induktiven Energieübertragung angeordnet ist, mit einer Schnittstelle, welche eine elektrisch leitende Kontaktierung dieser Spuleneinrichtung (10) ermöglicht, wobei das Gehäuse (2) einen ersten Gehäuseteil (22) und einen zweiten Gehäuseteil (24) aufweist, welche mit wenigstens einem Befestigungsmittel (74) aneinander befestigt sind und wobei sich die beiden Gehäuseteile (22, 24) jeweils zumindest entlang einer Längsrichtung (L) und einer zu dieser Längsrichtung (L) senkrechten Breitenrichtung (B) erstrecken, und mit wenigstens einer elektrischen Anschlusseinrichtung (6), um die elektrische Baueinheit (1) an ein Stromnetz anzuschließen , wobei die Baueinheit (1) eine Trägereinrichtung (280) zum Tragen der Spuleneinrichtung (10) aufweist und wobei eine elektronische Steuereinrichtung (142, 144) zum Steuern der Baueinheit (1) an und/oder in dieser Trägereinrichtung (280) angeordnet ist, **dadurch gekennzeichnet, dass** die beiden Gehäuseteile (22, 24) bezüglich einander in der Längsrichtung und/oder der Breitenrichtung beweglich gelagert sind .

2. Elektrische Baueinheit (1) nach Anspruch 1,
**dadurch gekennzeichnet, dass**
diese Trägereinrichtung (280) aus einem Kunststoff gefertigt ist.

3. Elektrische Baueinheit (1) nach wenigstens einem der vorangegangenen Ansprüche,
**dadurch gekennzeichnet, dass**
die Trägereinrichtung (280) wenigstens eine Kammer (60) zur Unterbringung von Komponenten der Baueinheit aufweist oder begrenzt.

4. Elektrische Baueinheit (1) nach dem vorangegangenen Anspruch,
**dadurch gekennzeichnet, dass**
die Trägereinrichtung (280) eine zweite Kammer zur Unterbringung von Komponenten der Baueinheit (1) aufweist.

5. Elektrische Baueinheit (1) nach wenigstens einem der vorangegangenen Ansprüche, **dadurch gekennzeichnet, dass**
die Baueinheit (1) einen Schutzrahmen aufweist, der wenigstens abschnittsweise elektronische Komponenten der Baueinheit umgibt.

6. Elektrische Baueinheit (1) nach wenigstens einem der vorangegangenen Ansprüche, **dadurch gekennzeichnet, dass**
zwischen der elektronischen Steuereinrichtung (142, 144) und wenigstens einem Gehäuseteil (22, 24) ein Zwischenraum ausgebildet ist.

7. Elektrische Baueinheit nach dem vorangegangenen Anspruch,
**dadurch gekennzeichnet, dass**
in diesem Zwischenraum eine pastöse Substanz angeordnet ist.

8. Elektrische Baueinheit (1) nach wenigstens einem der vorangegangenen Ansprüche, **dadurch gekennzeichnet, dass**
die Baueinheit (1) eine Verdrehschutzeinrichtung für Kabelzuführungen aufweist.

9. Elektrische Baueinheit (1) nach wenigstens einem der vorangegangenen Ansprüche, **dadurch gekennzeichnet, dass**
die Baueinheit (1) eine Führungseinrichtung zum wenigstens abschnittsweisen Führen wenigstens einer Litze der Spuleneinrichtung (10) aufweist.

10. Induktive Ladeanordnung (100) für Kraftfahrzeuge mit einer ersten Induktionsvorrichtung (102), welche insbesondere stationär angeordnet ist und einer zweiten Induktionsvorrichtung (104), welche an dem Kraftfahrzeug montierbar ist,
wobei die erste Induktionsvorrichtung (102) eine erste Spuleneinrichtung (10) aufweist und die zweite Induktionsvorrichtung (104) eine zweite Spuleneinrichtung (140) und die erste Spuleneinrichtung (10) und die zweite Spuleneinrichtung (140) zur induktiven Energieübertragung geeignet und bestimmt sind, und wobei die zweite Induktionsvorrichtung (104) eine Steuerungseinrichtung (106) aufweist, welche dazu geeignet und bestimmt ist, von der zweiten Spuleneinrichtung (140) ausgegebene Ströme gesteuert an eine Last (150) auszugeben,
**dadurch gekennzeichnet, dass**
die erste Induktionsvorrichtung (102) eine elektrische Baueinheit (1) nach wenigstens einem der vorangegangenen Ansprüche aufweist oder ist.

## Claims

1. Electrical construction unit (1) for inductive charging current transmission having a housing (2) within which at least one electrical coil device (10) for inductive energy transmission is arranged, having an interface which enables electrically conductive contacting of this coil device (10), wherein the housing (2) having a first housing part (22) and a second housing part (12), which are fastened to one another by at least one fastening means (74) and wherein the two housing parts (22, 12) each extending at least along a longitudinal direction (L) and a width direction (B) perpendicular to this longitudinal direction (L), and having at least one electrical connection device (6) for connecting the electrical construction unit (1) to a power supply system,
wherein the construction unit (1) having a carrier device (280) for supporting the coil device (10) and wherein a electronical control device (142, 144) for controlling the construction unit (1) is arranged on and/or in this carrier device (280),
**characterised in that**
the two housing parts (22, 24) are mounted movable with respect to each other in the longitudinal direction and/or the width direction.

2. Electrical construction unit (1) according to claim 1,
**characterised in that**
this carrier device (280) is made from a plastic.

3. Electrical construction unit (1) according to at least one of the preceding claims,
**characterised in that**
the carrier device (280) has or delimits at least one chamber (60) for housing components of the construction unit (1).

4. Electrical construction unit (1) according to the preceding claim, **characterised in that**
the carrier device hast at least one second chamber for housing components of the construction unit (1).

5. Electrical construction unit (1) according to at least one of the preceding claims,
**characterised in that**
the construction unit (1) has a protection frame which at least at sections surrounds electronic components of the construction unit.

6. Electrical construction unit (1) according to at least one of the preceding claims,
**characterised in that**
between the electronical control device (142, 144) and at least one housing part (22, 24) an intermediate space is formed.

7. Electrical construction unit (1) according to the preceding claim, **characterised in that**
a pasty substance is arranged in this intermediate space.

8. Electrical construction unit (1) according to at least one of the preceding claims,
**characterised in that**
the construction unit (1) has an anti-twist protection device for cable feedings.

9. Electrical construction unit (1) according to at least one of the preceding claims,
**characterised in that**
the construction unit (1) has a guiding device for guiding at least sectionally a lace of the coil device (10).

10. Inductive charging arrangement for motor vehicles having a first induction device (102), which is arranged in particular in a stationary manner, and a second induction device (104), which can be mounted on the motor vehicle,
wherein the first induction device (102) having a first coil device (10) and the second induction device having a second coil device (140), and the first coil device (22) and the second coil device (140) being suitable and intended for the inductive transmission of energy, and wherein the second induction device (104) comprises a control device which is suitable and intended for outputting currents output by the second coil device (140) to a load (150) in a controlled manner,
**characterised in that**
the first induction device (102) comprises or is an electrical construction unit (1) according to at least one of the preceding claims.

## Revendications

1. Unité modulaire (1) électrique pour la transmission de courant de charge par induction pour des véhicules à moteur avec un boîtier (2) à l'intérieur duquel est disposé au moins un système de bobine (10) électrique pour la transmission d'énergie par induction, avec une interface, laquelle permet une mise en contact électro-conductrice de ce système de bobine (10), dans laquelle le boîtier (2) présente une première partie de boîtier (22) et une deuxième partie de boîtier (24), lesquelles sont fixées l'une sur l'autre avec au moins un moyen de fixation (74) et dans laquelle les deux parties de boîtier (22, 24) s'étendent respectivement au moins le long d'une direction longitudinale (L) et d'une direction de largeur (B) perpendiculaire à cette direction longitudinale (L), et avec au moins un système de raccordement électrique (6), afin de raccorder l'unité modulaire (1) électrique à un réseau électrique,
dans laquelle l'unité modulaire (1) présente un système de support (280) pour porter le système de bobine (10) et dans laquelle un système de commande électrique (142, 144) pour commander l'unité modulaire (1) est disposé sur et/ou dans ce système de support (280),
**caractérisée en ce que**
les deux parties de boîtier (22, 24) sont montées l'une par rapport à l'autre dans la direction longitudinale (L) et/ou la direction de largeur.

2. Unité modulaire (1) électrique selon la revendication 1,
**caractérisée en ce que**
ce système de support (280) est fabriqué à partir d'une matière plastique.

3. Unité modulaire (1) électrique selon au moins l'une des revendications précédentes,
**caractérisée en ce que**
le système de support (280) présente ou délimite au moins une chambre (60) pour loger les composants de l'unité modulaire.

4. Unité modulaire (1) électrique selon la revendication précédente, **caractérisée en ce que**
le système de support (280) présente une deuxième chambre pour loger les composants de l'unité modulaire (1).

5. Unité modulaire (1) électrique selon au moins l'une des revendications précédentes,
**caractérisée en ce que**
l'unité modulaire (1) présente un cadre de protection, qui entoure au moins en partie les composants électroniques de l'unité modulaire.

6. Unité modulaire (1) électrique selon au moins l'une des revendications précédentes,
**caractérisée en ce que**
un espace intermédiaire est réalisé entre le système de commande électrique (142, 144) et au moins une partie de boîtier (22, 24).

7. Unité modulaire électrique selon la revendication précédente, **caractérisée en ce que**
une substance pâteuse est disposée dans cet espace intermédiaire.

8. Unité modulaire (1) électrique selon au moins l'une des revendications précédentes,
**caractérisée en ce que**
l'unité modulaire (1) présente un système de protection anti-torsion pour les conduites d'amenée de câble.

9. Unité modulaire (1) électrique selon au moins l'une des revendications précédentes,
**caractérisée en ce que**
l'unité modulaire (1) présente un système de guidage pour guider au moins en partie au moins un toron du système de bobine (10).

10. Ensemble de charge par induction (100) pour des véhicules à moteur avec un premier dispositif d'induction (102), lequel est disposé en particulier de manière fixe et un deuxième dispositif d'induction (104), lequel peut être monté sur le véhicule à moteur,
dans lequel le premier dispositif d'induction (102) présente un premier système de bobine (10) et le deuxième dispositif d'induction (104) un deuxième système de bobine (140) et le premier système de bobine (10) et le deuxième système de bobine (140) sont adaptés et destinés à la transmission d'énergie par induction, et dans laquelle le deuxième dispositif d'induction (104) présente un système de commande (106), lequel est adapté et destiné à délivrer de manière commandée à une charge (150) des courants délivrés par le deuxième système de bobine (140),
**caractérisé en ce que**
le premier dispositif d'induction (102) présente ou est une unité modulaire (1) électrique selon au moins l'une des revendications précédentes.
